# EUROPEAN PATENT APPLICATION

(11) **EP 1 713 189 A1**
(43) Date of publication of application: **18.10.2006**
(21) Application number: 05709619.0
(22) Date of filing: 02.02.2005
(51) Int. Cl.: H04B 7/26, H04M 3/487, H04Q 7/20

(54) **TERMINAL APPARATUS AND RECEIVED DATA DISPLAYING METHOD**

(30) Priority: 05.02.2004 JP 2004029624
(71) Applicant: Matsushita Electric Industrial Co., Ltd., Osaka 571-8501 (JP)
(72) Inventor: IDO, Daiji c/o Matsushita El.Ind.Co,.Ltd., Chuo-ku, Osaka 540-6319 (JP); YONEMOTO, Yoshifumi c/o Matsushita El.Ind.Co.Ltd., Chuo-ku, Osaka 540-6319 (JP); YAMAGUCHI, Takao c/o Matsushita El.Ind.Co.Ltd., Chuo-ku, Osaka 540-6319 (JP); SATO, Junichi c/o Matsushita El.Ind.Co.Ltd., Chuo-ku, Osaka 540-6319 (JP); TAKEI, Ichiro c/o Matsushita El.Ind.Co.Ltd., Chuo-ku, Osaka 540-6319 (JP)
(74) Representative: Grünecker, Kinkeldey, Stockmair & Schwanhäusser Anwaltssozietät
(86) International application number: PCT/JP2005/001499
(87) International publication number: WO 2005/076499

(57) **Abstract**

Distributed data is not edited at a distributing end but is edited in a terminal apparatus, thereby reducing the cost. The terminal apparatus can quickly retrieve necessary information. In the apparatus, a cell ID extracting part (104) extracts all the cell IDs that can be currently received. A data receiving part (105) extracts distributed data. A data sorting part (106) compares the cell ID related to the distributed data with the cell IDs that can be currently received, and adds priorities to the distributed data in such a manner that a "high" priority is given to the distributed data related to the same cell ID as the local cell, while the lower priorities being given to the distributed data related to the cell IDs of other cells that are farther from the local cell. A display part (108) sequentially displays the distributed data in decreasing order of the priority.

## Description

### Technical Field

The present invention relates to a terminal apparatus and received data display method, and relates, for example, to a terminal apparatus and received data display method used in a service whereby advertisements and suchlike distribution data are distributed to a terminal apparatus from a distribution server.

### Background Art

In third-generation mobile communication systems, a broadcasting service is known whereby distribution data is simultaneously transmitted to a plurality of mobile terminals (see Patent Document 1, for example).

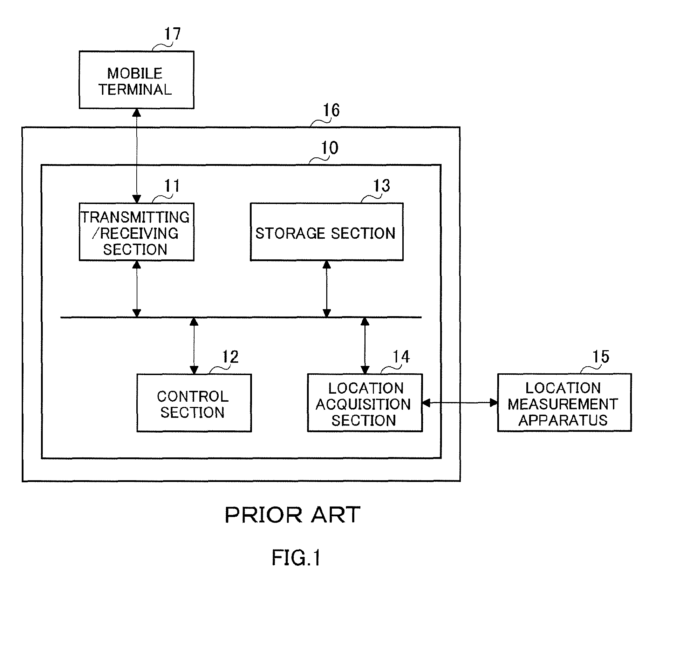

FIG. 1 is a block diagram showing the configuration of a communication system in a conventional broadcasting system in which distribution data is transmitted. FIG.1, location information transmitting apparatus 10 is equipped with transmitting/receiving section 11, control section 12, storage section 13, and location acquisition section 14.

Transmitting/receiving section 11 is used when transmitting/receiving movement-related information such as location information and location information dependent message information. Control section 12 includes a clock, CPU, and so forth, and performs overall control of the various sections. In storage section 13, movement-related information is stored associated with transmission conditions.

In location acquisition section 14, location measurement apparatus 15 receives a plurality of electromagnetic waves transmitted from a plurality of satellites or the like, calculates the mobile location of mobile device 16 from the received power values of these electromagnetic waves, creates location information from this calculated data, and passes this location information to storage section 13. Mobile terminal 17 receives desired movement-related information based on the transmission conditions from location information transmitting apparatus 10.
Patent Document 1: Japanese Patent Application Unexamined Publication No.2002-165264

### Disclosure of Invention

### Problems to be Solved by the Invention

However, with a conventional terminal apparatus and received data display method, it is necessary for distribution data to be edited for each mobile device individually on the distribution end based on the locations of mobile devices measured on the distribution end, and the associated costs are a problem. Also, with a conventional terminal apparatus and received data display method, if the distribution end distributes distribution data without performing editing on an individual basis in order to reduce costs, there is a problem in that a user who views distribution data received by a mobile device must search for necessary information among all the received distribution data, and thus necessary information cannot be found speedily.

It is an obj ect of the present invention to provide a terminal apparatus and received data display method that enable costs to be reduced and necessary information to be found speedily by editing distribution data in the terminal apparatus and not editing distribution data on the distribution end.

### Means for Solving the Problems

A terminal apparatus of the present invention employs a configuration that includes: a receiving section that receives distribution data containing cell information, which is information for identifying an area specified by a cell; a data sort section that, based on the aforementioned cell information contained in the aforementioned distribution data received by the aforementioned receiving section, and information of the aforementioned area to which the station itself belongs, determines the priority of the aforementioned distribution data, and arranges the aforementioned distribution data in order starting with the distribution data with the highest aforementioned priority; and a display section that displays the aforementioned distribution data in the order in which it has been arranged by the aforementioned data sort section.

A received data display method of the present invention includes: a step of receiving distribution data containing cell information, which is information for identifying an area specified by a cell; a step of, based on the aforementioned cell information contained in received aforementioned distribution data, and information of the aforementioned area to which the station itself belongs, determining the priority of the aforementioned distribution data, and arranging the aforementioned distribution data in order starting with the distribution data with the highest aforementioned priority; and a step of displaying the aforementioned distribution data in the order in which it has been arranged.

### Advantageous Effect of the Invention

The present invention enables costs to be reduced and necessary information to be found speedily by editing distribution data in a terminal apparatus and not editing distribution data on the distribution end

### Brief Description of Drawings

FIG.1 is a block diagram showing the configuration of a conventional distribution server;
FIG.2 is a block diagram showing the configuration of a terminal apparatus according to Embodiment 1 of the present invention;
FIG.3 is a block diagram showing the configuration of a distribution server according to Embodiment 1 of the present invention;
FIG.4 is a schematic diagram showing a network;
FIG.5 is a drawing showing distribution data according to Embodiment 1 of the present invention;
FIG.6 is a flowchart showing the operation of a terminal apparatus according to Embodiment 1 of the present invention;
FIG.7 is a drawing showing distribution data according to Embodiment 1 of the present invention;
FIG.8 is a drawing showing distribution data according to Embodiment 1 of the present invention;
FIG.9 is a drawing showing distribution data according to Embodiment 1 of the present invention;
FIG. 10 is a drawing showing a display of the display section of a terminal apparatus according to Embodiment 1 of the present invention;
FIG. 11 is a drawing showing a display of the display section of a terminal apparatus according to Embodiment 1 of the present invention;
FIG.12 is a block diagram showing the configuration of a terminal apparatus according to Embodiment 2 of the present invention;
FIG.13 is a drawing showing distribution data according to Embodiment 2 of the present invention;
FIG.14 is a drawing showing a display of the display section of a terminal apparatus according to Embodiment 2 of the present invention;
FIG.15 is a drawing showing a display of the display section of a terminal apparatus according to Embodiment 2 of the present invention;
FIG.16 is a block diagram showing the configuration of a terminal apparatus according to Embodiment 3 of the present invention;
FIG.17 is a flowchart showing the operation of a terminal apparatus according to Embodiment 3 of the present invention;
FIG.18 is a drawing showing data sort information according to Embodiment 3 of the present invention;
FIG.19 is a block diagram showing the configuration of a terminal apparatus according to Embodiment 4 of the present invention;
FIG.20 is a drawing showing a display of the display section of a terminal apparatus according to Embodiment 4 of the present invention;
FIG.21 is a drawing showing a display of the display section of a terminal apparatus according to Embodiment 4 of the present invention;
FIG.22 is a block diagram showing the configuration of a terminal apparatus according to Embodiment 5 of the present invention;
FIG.23 is a drawing showing distribution data according to Embodiment 5 of the present invention;
FIG.24 is a drawing showing a display of the display section of a terminal apparatus according to Embodiment 5 of the present invention;
FIG.25 is a block diagram showing the configuration of a terminal apparatus according to Embodiment 6 of the present invention;
FIG.26 is a block diagram showing the configuration of a distribution server according to Embodiment 6 of the present invention; and
FIG.27 is a drawing showing the relationship between a network area and cells.

### Best Mode for Carrying Out the Invention

Now, embodiments of the present invention will be described in detail with reference to the accompanying drawings.

### (Embodiment 1)

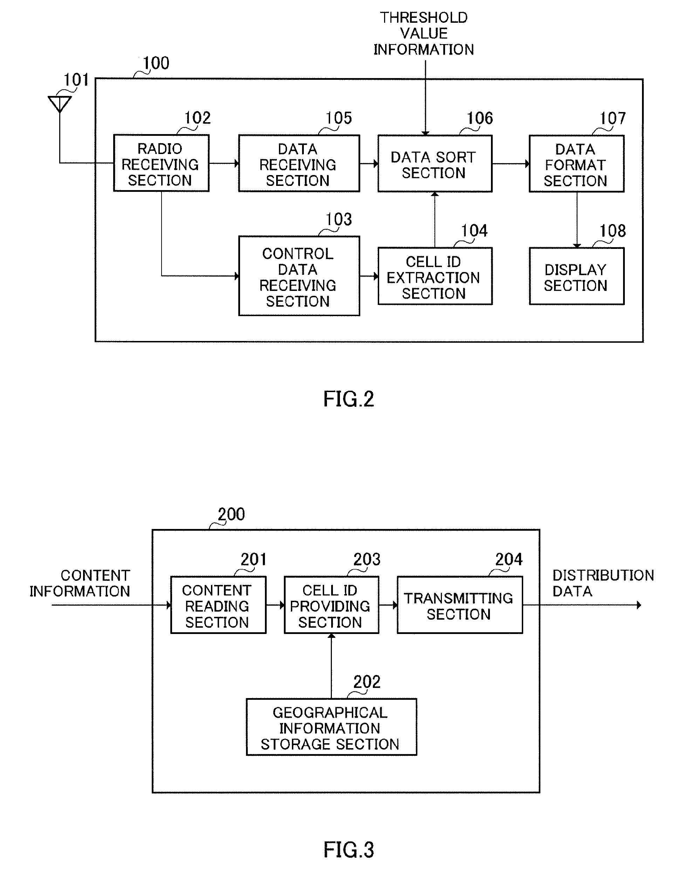

FIG.2 is a block diagram showing the configuration of terminal apparatus 100 according to Embodiment 1 of the present invention.

Radio receiving section 102 down-converts a received signal received by antenna 101 from radio frequency to baseband frequency, and outputs the resulting signal to data receiving section 105 and control data receiving section 103.

Control data receiving section 103 extracts all control information other than application data from a received signal input from radio receiving section 102, and outputs this control information to cell ID extraction section 104.

Cell ID extraction section 104 extracts, from control information input from control data receiving section 103, the cell ID (cell information) of its own cell (hereinafter referred to as 'the local cell'), in which terminal apparatus 100 is currently performing communication, and outputs cell ID information--that is, information as to the extracted cell ID--to data sort section 106. Here, the cell ID is an ID identifying the cell, and is represented numerically so that a different numeric value is indicated for each cell.

Data receiving section 105 extracts distribution data from a received signal input from radio receiving section 102, and outputs this data to data sort section 106. The distribution data extracted by data receiving section 105 is program selection menu information for selecting a broadcast program.

Data sort section 106 compares the cell ID contained in the distribution data input from data receiving section 105 with the cell ID input from cell ID extraction section 104. Then, based on the result of the comparison, data sort section 106 arranges the distribution data input from data receiving section 105, and outputs this data to data format section 107. Specifically, whether or not there is distribution data containing the cell ID of the local cell in which communication is currently being performed is determined, the difference between the cell ID contained in the distribution data and the cell ID of the local cell is found, the found difference is compared with a threshold value, the priority of each distribution data is determined, and distribution data is arranged accordingly. When only distribution data containing the cell ID of the local cell is arranged, threshold value information is not necessary.

Data format section 107 converts distribution data input from data sort section 106 to a predetermined format for display, and outputs this converted data to display section 108.

Display section 108 displays distribution data input from data format section 107.

The configuration of distribution server 200 will now be described using FIG.3. FIG.3 is a block diagram showing the configuration of distribution server 200.

A content reading section 201 reads content (multimedia data such as text, image, and voice data), and outputs this data to cell ID providing section 203. Here, content includes a plurality of arbitrary information associated with a latitude and longitude constituting location information, comprising, for example, information indicating correspondence between a store and the latitude and longitude of the store, or information indicating correspondence between regional news and the latitude and longitude of that region.

A geographical information storage section 202 stores a table holding conversion information indicating correspondence between cell IDs and a range of latitudes and longitudes, or a formula enabling a cell ID to be found from a latitude and longitude.

Cell ID providing section 203 references latitude information and longitude information from content input from content reading section 201. Then, using the referenced latitude information and longitude information, cell ID providing section 203 selects a cell ID by referencing conversion information stored in geographical information storage section 202, or performing calculation using a formula.
Cell ID providing section 203 then includes a cell ID selected for the contents of each content in the relevant content, and outputs this to transmitting section 204.

Transmitting section 204 transmits content input from cell ID providing section 203 as distribution data.

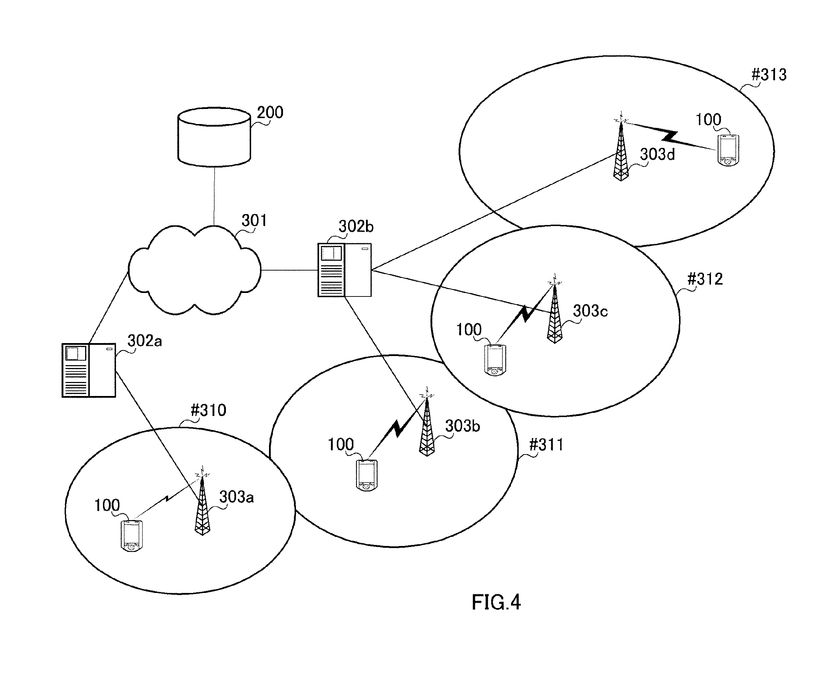

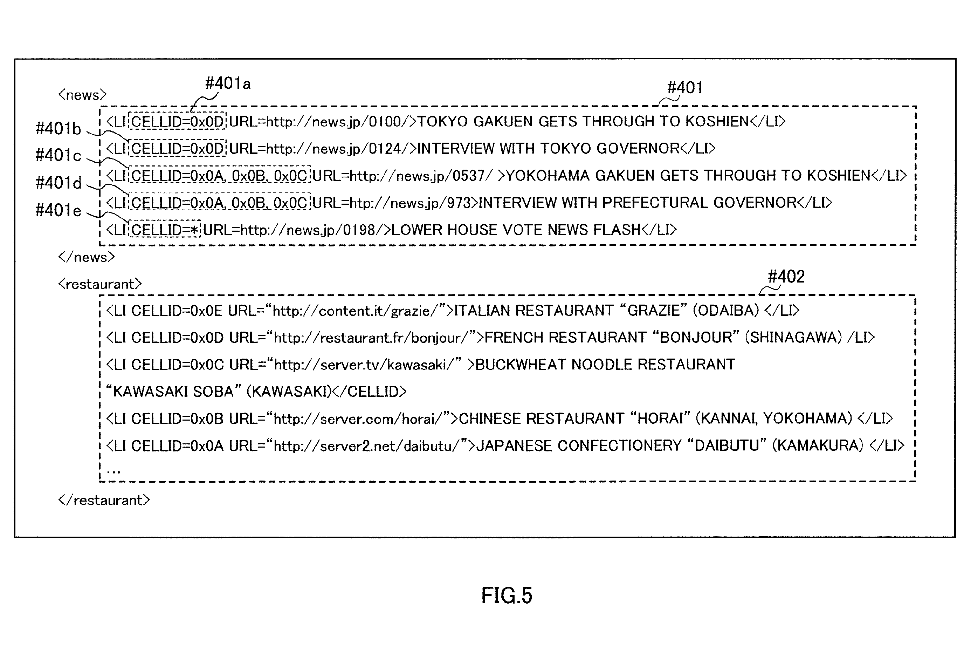

The procedure up to reception by terminal apparatus 100 of distribution data transmitted from distribution server 200 will now be described using FIG. 4 and FIG.5.

In FIG.4, cells #310, #311, #312, and #313 are areas specified by one cell each. Distribution server 200 outputs distribution data to core network 301. Distribution data comprises, for example, news information #401 and restaurant information #402, as shown in FIG.5. In news information #401, '0x0D' cell ID information #401a is included in the 'Tokyo Gakuen gets through to Koshien' program selection menu information in the first line, '0x0D' cell ID information #401b is included in the 'Interview with Tokyo Governor' program selection menu information in the second line, '0x0A', '0x0B', and '0x0C' cell ID information #401c is included in the 'Yokohama Gakuin gets through to Koshien' program selection menu information in the third line, '0x0A', '0x0B', and '0x0C' cell ID information #401d is included in the 'Interview with Prefectural Governor' program selection menu information in the fourth line, and all cell ID information #401e indicated by '*' is included in the 'Lower House Vote News Flash' program selection menu information in the fifth line. Thus, the various items of program selection menu information include cell ID information.

A cell ID is expressed as a hexadecimal number, with '0x0A' representing '10' when converted to decimal, '0x0B' representing '11', and '0x0C' representing '12'. It is therefore possible to perform hexadecimal or decimal subtraction between cell IDs, and determine that the cell for which the subtraction result is smallest between the cell ID of the local cell and the cell IDs of other cells is the other cell nearest the local cell. The present invention is not limited to expression of cell IDs as hexadecimal numbers, and it is possible to use any numeric notation (such as binary, for example) to represent a cell ID. The same applies to restaurant information #402 as to news information #401, and therefore a description relating to restaurant information #402 is omitted here.

Next, the distribution data in FIG.5 distributed from distribution server 200 arrives at network control apparatuses 302a and 302b via core network 301. Network control apparatuses 302a and 302b can transmit distribution data to a plurality of base station apparatuses, with network control apparatus 302a transmitting distribution data to base station apparatus 303a of cell #310 (for example, the Shonan area), and network control apparatus 302b transmitting distribution data to base station apparatus 303b of cell #311 (for example, the Yokohama area), base station apparatus 303c of cell #312 (for example, the Kawasaki area), and base station apparatus 303d of cell #313 (for example, the Shinagawa area). Each base station apparatus then transmits the distribution data to a terminal apparatus 100 performing communication within the cell.

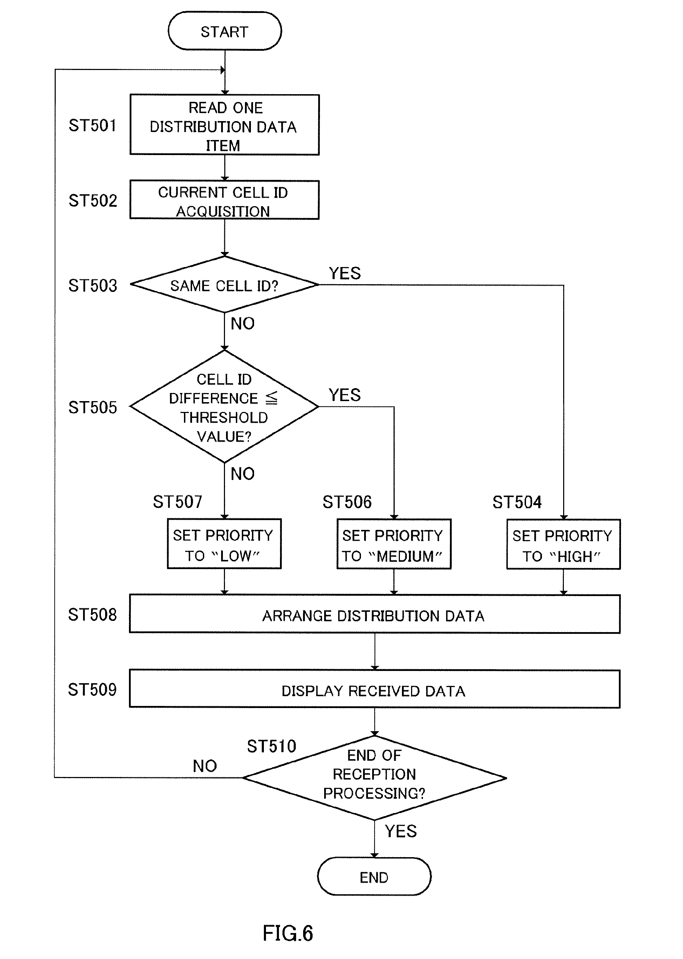

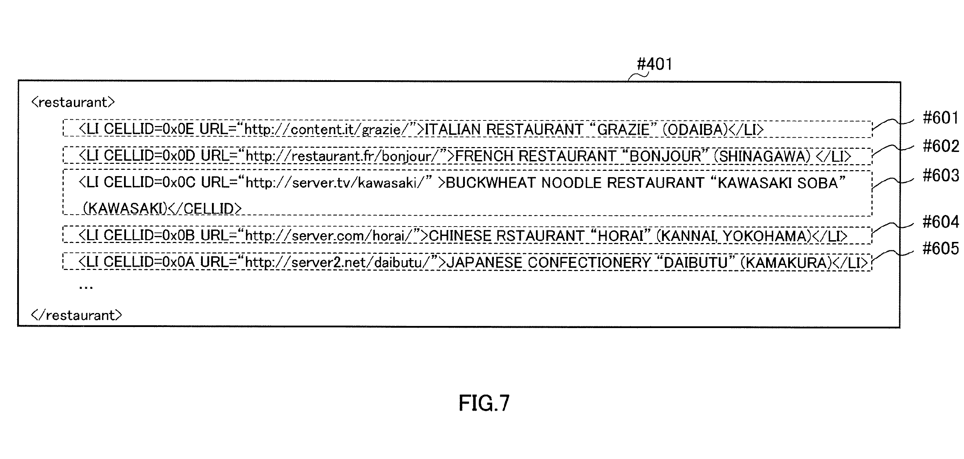

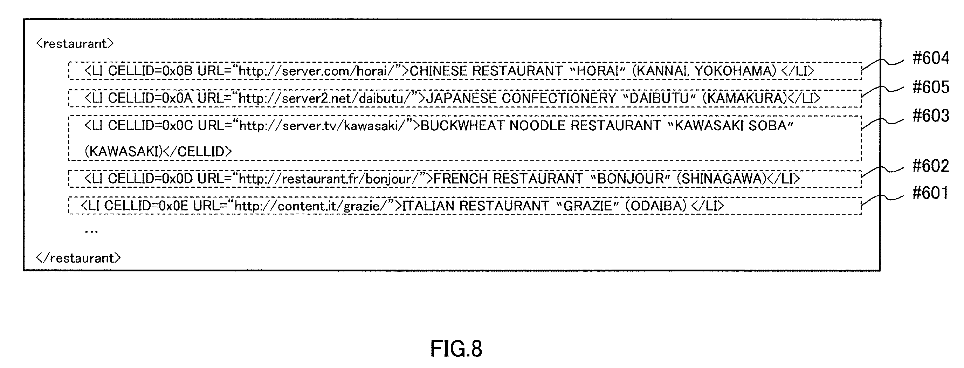

The operation of terminal apparatus 100 that receives distribution data will now be described using FIG.6 through FIG.8. FIG.6 is a flowchart showing the operation of terminal apparatus 100, and FIG.7 and FIG.8 are drawings showing distribution data distributed for display on terminal apparatus 100.

First, terminal apparatus 100 starts a receive operation, and in the case of distribution data such as that shown in FIG.5, for example, reads one item of the restaurant information distribution data shown in FIG.7 (step ST501), and data receiving section 105 extracts the distribution data. In this case, distribution data is arranged in an order determined arbitrarily by the distribution data creator. At the same time, control data receiving section 103 extracts control information. Then cell ID extraction section 104 extracts the cell ID of the local cell in which it is itself performing communication, and obtains the cell ID (step ST502).

Next, data sort section 106 compares the cell ID contained in the distribution data with the extracted cell ID, and determines whether or not they are the same cell ID (step ST503). If they are the same cell ID, data sort section 106 makes the priority of the distribution data containing the same cell ID 'high' (step ST504). On the other hand, if they are not the same cell ID, data sort section 106 determines whether or not the difference between the cell ID contained in the distribution data and the extracted cell ID is less than or equal to a threshold value (step ST505). If the difference between the cell ID contained in the distribution data and the extracted cell ID is less than or equal to the threshold value, data sort section 106 makes the priority of the distribution data containing the cell ID that is less than or equal to the threshold value 'medium' (step ST506). If the difference between the cell ID contained in the distribution data and the extracted cell ID is not less than or equal to the threshold value, data sort section 106 makes the priority of the distribution data containing the cell ID that is not less than or equal to the threshold value 'low' (step ST507).

Next, data sort section 106 arranges the distribution data based on the respective priorities (step ST508). For example, if terminal apparatus 100 performing communication in Yokohama area cell #311 with a cell ID of '0x0B' receives restaurant information #401 in FIG.7, data sort section 106 selects program selection menu information #604 containing the '0x0B' cell ID and makes its priority 'high', and puts program selection menu information #604 in top place, as shown in FIG.8. Also, as a result of performing subtraction between cell IDs, data sort section 106 places program selection menu information #605 of Shonan area cell #310 with a cell ID of '0x0A', and program selection menu information #603 of Kawasaki area cell #312 with a cell ID of '0x0C', the nearest to Yokohama area cell #311, after program selection menu information #604. Also, data sort section 106 puts program selection menu information #602 of Shinagawa area cell #313 with a cell ID of '0x0D', the nearest to Yokohama area cell #311 after Shonan area cell #310 and Kawasaki area cell #312, in next place after program selection menu information #603. Furthermore, data sort section 106 puts program selection menu information #601 of an Odaiba area cell (not shown) with a cell ID of '0x0E', the farthest from Yokohama area cell #311, in next place after program selection menu information #602.

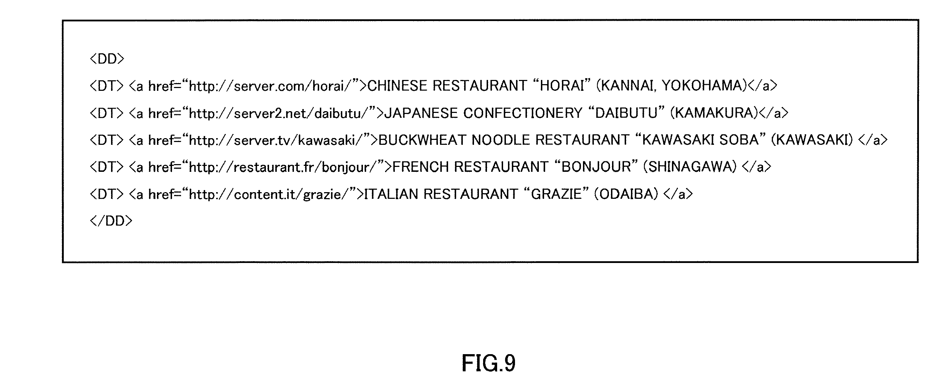

Data format section 107 then converts the distribution data to a predetermined format. For example, when terminal apparatus 100 has arranged distribution data as shown in FIG.8, the distribution data in FIG.8 is converted to the HTML format shown in FIG.9 that can be displayed by a general-purpose WWW browser. Next, display section 108 displays the distribution data (step ST509). Terminal apparatus 100 then determines whether or not distribution data reception processing is to be terminated (step ST510). If reception processing is not to be terminated, the processing in step ST501 through step ST509 is repeated. On the other hand, if reception processing is to be terminated, distribution data reception is not performed.

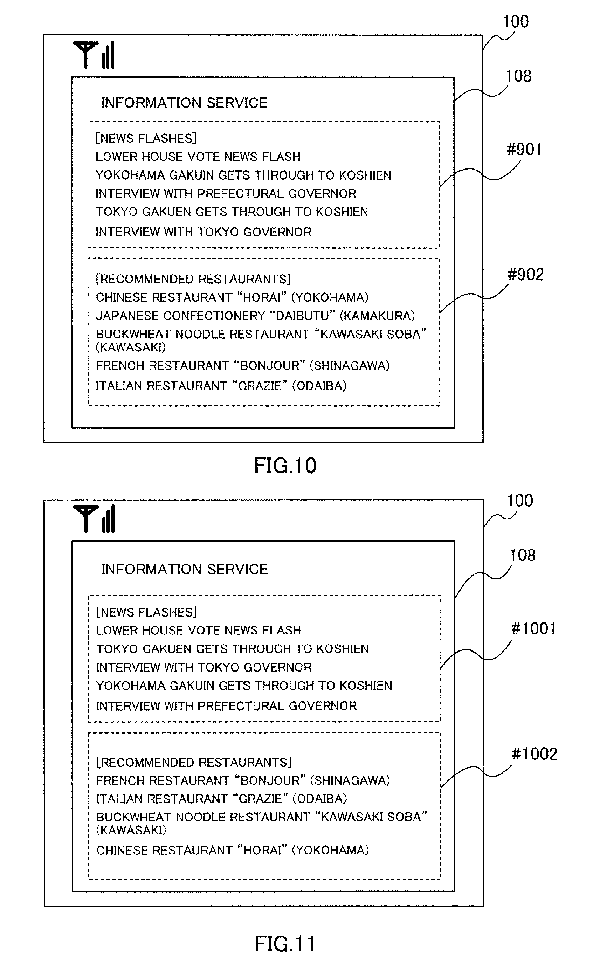

FIG.10 is a drawing showing the display on display section 108 of terminal apparatus 100 when terminal apparatus 100 is performing communication in cell #311, when cell #311 is a Yokohama area cell, for example. Distribution data news information #401, in which distribution data arranged as shown in FIG.8 has been converted as shown in FIG.9, is displayed as news information #901 as shown in FIG.10, and distribution data restaurant information #402, in which distribution data arranged as shown in FIG.8 has been converted as shown in FIG.9, is displayed as restaurant information #902 as shown in FIG.10. As shown in FIG.10, on terminal apparatus 100 performing communication in cell #311, Yokohama related news information and Yokohama restaurant information are displayed preferentially as high-priority information.

FIG.11 is a drawing showing the display on display section 108 of terminal apparatus 100 when terminal apparatus 100 is performing communication in cell #313, when cell #313 is a Shinagawa area cell, for example. In this case, distribution data news information #401 is displayed as news information #1001 as shown in FIG.11, and distribution data restaurant information #402 is displayed as restaurant information #1002 as shown in FIG.11. As shown in FIG.11, in terminal apparatus 100 performing communication in cell #313, Shinagawa related news information and Shinagawa restaurant information are displayed preferentially as high-priority information. Any method can be used to perform preferential display, such as displaying items of information from top to bottom in high-to-low priority order, or displaying only high-priority information.

Also, by providing a switching section such as a switch in display section 108 in FIG.2, it is also possible for the priority of 'low' priority news information and restaurant information or 'medium' priority news information and restaurant information, and the priority of 'high' priority news information and restaurant information, to be changed, and 'low' priority news information and restaurant information, or 'medium' priority news information and restaurant information, to be displayed as high-priority information. That is to say, by operating the switching section, a user can display news information and restaurant information associated with the cell ID of any cell among cell #310 through cell #313 as high-priority information, irrespective of the cell in which terminal apparatus 100 is performing communication.

Thus, according to Embodiment 1, by arranging and displaying distribution data based on the results of comparison between the cell ID of the local cell and cell IDs contained in various distribution data, distribution data can be edited in a terminal apparatus, and not edited on the distribution end, enabling costs to be reduced. Also, according to Embodiment 1, a terminal apparatus arranges distribution data automatically using cell IDs, enabling a user to find the most necessary information speedily. Furthermore, according to Embodiment 1, when distribution data associated with the cell ID of any cell among cell #310 through cell #313 is displayed as high-priority information by means of user selection, the user can speedily find distribution data associated with any location other than the location where the user is currently performing communication. Moreover, according to Embodiment 1, distribution data within the local cell can be displayed as highest-priority distribution data, enabling the user to find distribution data speedily within the cell in which the user is communicating using a terminal apparatus.

### (Embodiment 2)

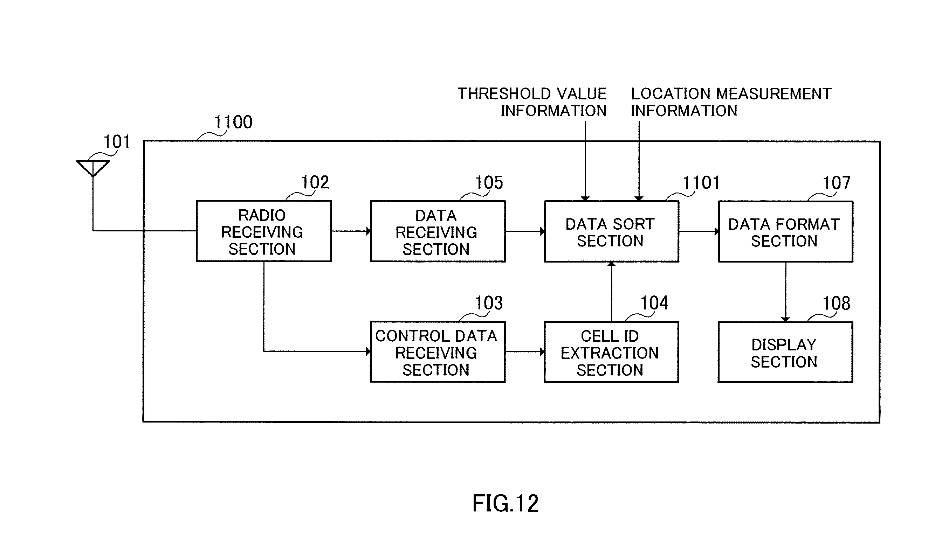

FIG.12 is a block diagram showing the configuration of a terminal apparatus 1100 according to Embodiment 2 of the present invention.

Terminal apparatus 1100 according to Embodiment 2 has data sort section 1101 as shown in FIG.12 instead of data sort section 106 in terminal apparatus 100 according to Embodiment 1 shown in FIG.2. Parts in FIG. 12 constituting the same configuration elements as in FIG.2 are assigned the same codes as in FIG.2, and descriptions thereof are omitted. The configuration of a distribution server according to Embodiment 2 is identical to that in FIG.3, and therefore a description thereof is also omitted here.

Data sort section 1101 compares the cell ID contained in distribution data with a cell ID input from cell ID extraction section 104. Then, based on the result of the comparison and the latitude and longitude at which terminal apparatus 1100 is performing communication measured using GPS or the like, data sort section 1101 arranges the distribution data input from data receiving section 105, and outputs this data to a data format section 107. Specifically, whether or not a cell ID identical to a cell ID contained in the distribution data is present in the cell IDs input from cell ID extraction section 104 is determined, the difference between the cell ID contained in the distribution data and the cell ID input from cell ID extraction section 104 is found, the found difference is compared with a threshold value, the priority of each distribution data is determined, and the various distribution data are arranged into predetermined groups designated 'high', 'medium', and 'low' priority. Data sort section 1101 then compares the latitude and longitude of each distribution data with the latitude and longitude at which terminal apparatus 1100 is performing communication with respect to each group, and arranges distribution data within each group based on the comparison result. When only distribution data containing the cell ID of the local cell is arranged by data sort section 1101, threshold value information is not necessary. The procedure up to reception by terminal apparatus 1100 of distribution data distributed from distribution server 200, and the operation of terminal apparatus 1100, are the same as in FIG.4 and FIG.6, and therefore a description thereof is omitted here.

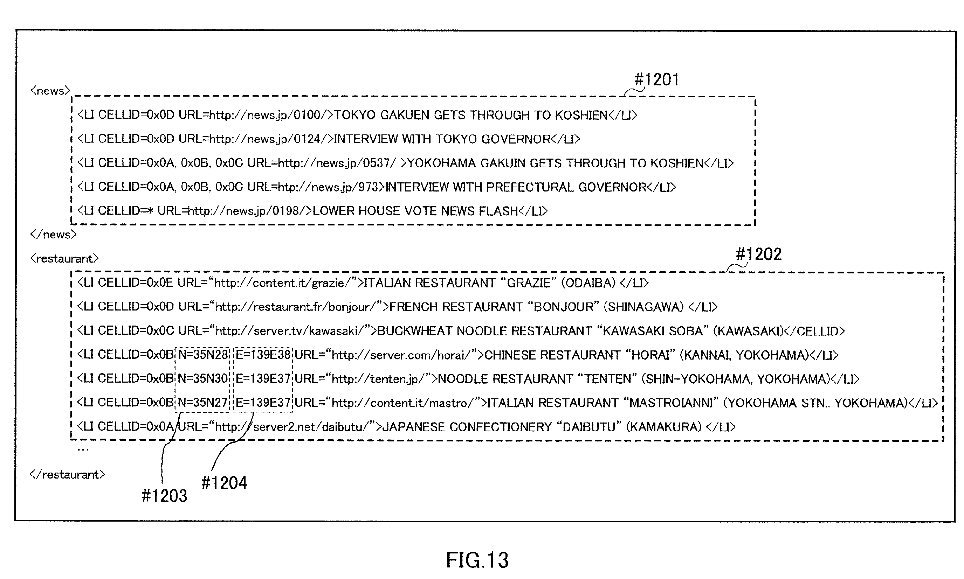

FIG.13 is a drawing showing distribution data distributed from distribution server 200. Distribution data comprises, for example, news information #1201 and restaurant information #1202, as shown in FIG.13. Restaurant information #1202 includes latitude information #1203, which is information as to latitude, and longitude information #1204, which is information as to longitude. The distribution data shown in FIG.13 is distributed from distribution server 200 to terminal apparatus 1100.

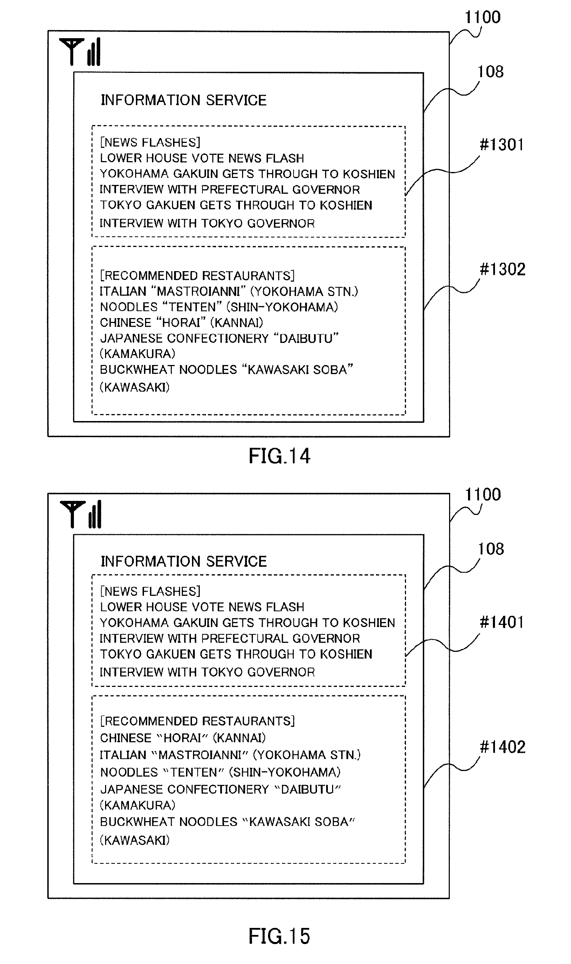

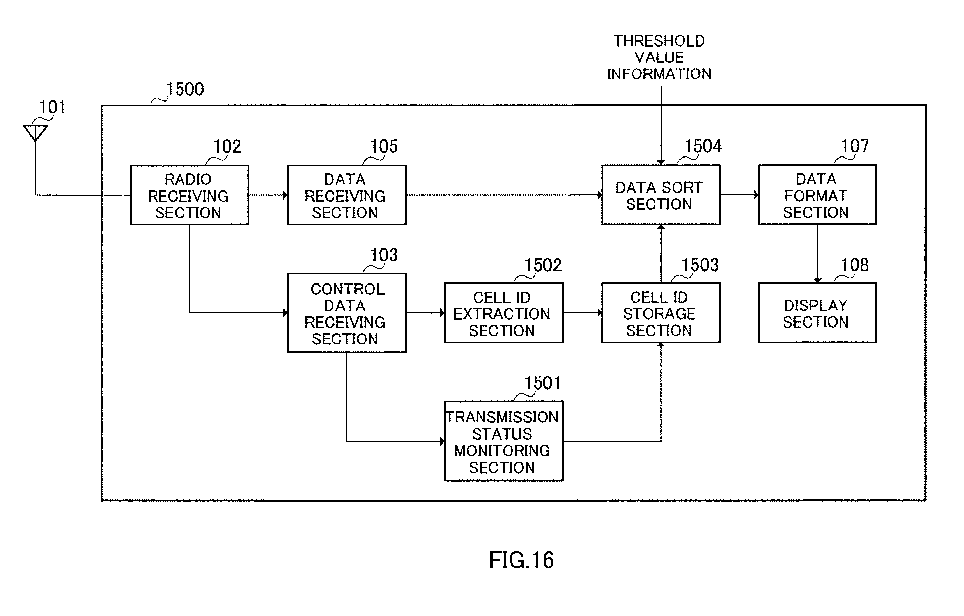

FIG.14 and FIG.15 are drawings showing distribution data displayed on display section 108 of terminal apparatus 1100. FIG. 14 shows distribution data displayed on terminal apparatus 1100 when terminal apparatus 1100 is performing communication at north latitude (N) '35N27' and east longitude (E) '139E37', and FIG.15 shows distribution data displayed on terminal apparatus 1100 when terminal apparatus 1100 is performing communication at north latitude (N) '35N28' and east longitude (E) '139E38'. In FIG.14 and FIG.15, distribution data news information #1201 shown in FIG.13 is displayed as news information #1301 and #1401, and distribution data restaurant information #1202 shown in FIG.13 is displayed as restaurant information #1302 and #1402. As shown in FIG.14, when cell #311 is a Yokohama area cell, on terminal apparatus 1100 performing communication at north latitude (N) '35N27' and east longitude (E) '139E37' in cell #311, Yokohama related news information #1301 and Yokohama restaurant information #1302 are displayed preferentially as high-priority information, and in preferentially displayed Yokohama restaurant information #1302, a restaurant at north latitude (N) '35N27' and east longitude (E) '139E37' is further displayed preferentially as high-priority information. Also, as shown in FIG.15, on terminal apparatus 1100 performing communication at north latitude (N) '35N28' and east longitude (E) '139E38' in cell #311, Yokohama related news information #1401 and Yokohama restaurant information #1402 are displayed preferentially as high-priority information, and in preferentially displayed Yokohama restaurant information #1402, a restaurant at north latitude (N) '35N28' and east longitude (E) '139E38' is further displayed preferentially as high-priority information.

Thus, according to Embodiment 2, in addition to providing the effects of Embodiment 1 described above, priorities can be assigned with greater precision by using latitudes and longitudes, enabling a user to find necessary information still more speedily.

In Embodiment 2, the use of latitude and longitude has been assumed as location information employed when distribution data is arranged by data sort section 1101, but this is not a limitation, and it is possible to use any location information, such as a zip code or the like, on condition that this location information is the same as the location information associated with content information.

### (Embodiment 3)

FIG.16 is a block diagram showing the configuration of a terminal apparatus 1500 according to Embodiment 3 of the present invention.

In terminal apparatus 1500 according to Embodiment 3, as shown in FIG.16, a transmission status monitoring section 1501 and a cell ID storage section 1503 are added to the configuration of terminal apparatus 100 according to Embodiment 1 shown in FIG.2, a cell ID extraction section 1502 is provided instead of cell ID extraction section 104, and a data sort section 1504 is provided instead of data sort section 106. Parts in FIG.16 constituting the same configuration elements as in FIG.2 are assigned the same codes as in FIG.2, and descriptions thereof are omitted. The configuration of a distribution server according to Embodiment 3 is identical to that in FIG.3, and therefore a description thereof is also omitted here.

Transmission status monitoring section 1501 measures the received signal strength of a received signal input from control data receiving section 103, and outputs the result of the measurement to cell ID storage section 1503.

Cell ID extraction section 1502 extracts, from control information input from control data receiving section 103, all cell IDs for which reception is currently possible containing the cell ID of the local cell in which terminal apparatus 1500 is currently performing communication, and outputs cell ID information--that is, information on the extracted cell IDs--to cell ID storage section 1503.

Using the extracted cell ID information input from cell ID extraction section 1502 and the measurement result input from transmission status monitoring section 1501, cell ID storage section 1503 associates cell IDs with received signal strength and creates data sort information, and also stores a table that holds the data sort information.

Using cell ID information contained in distribution data input from the data receiving section, data sort section 1504 references the data sort information stored in cell ID storage section 1503, and arranges the distribution data so that distribution data associated with a cell ID for which the received signal strength is high has a proportionally higher priority.

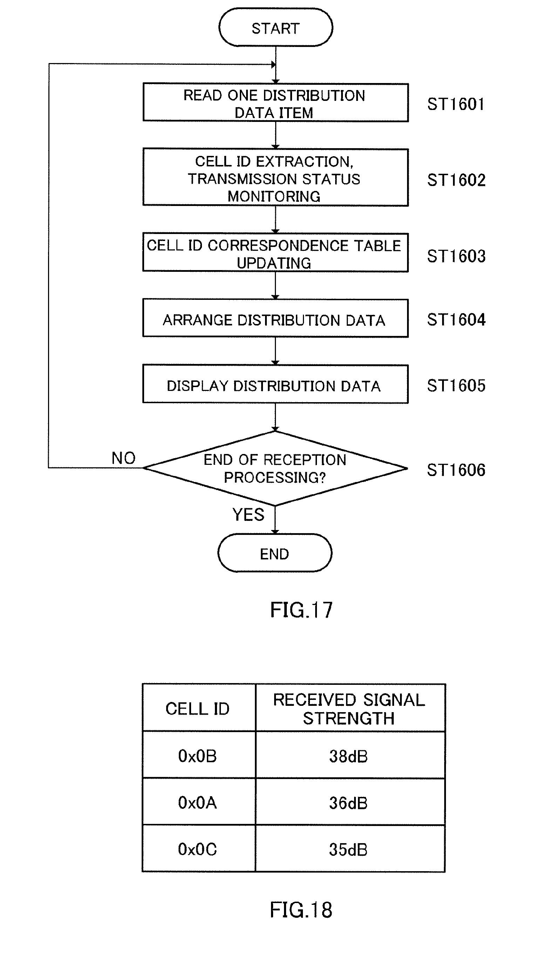

The operation of terminal apparatus 1500 will now be described using FIG.17 and FIG.18. FIG.17 is a flowchart showing the operation of terminal apparatus 1500, and FIG.18 is a drawing showing data sort information.

First, terminal apparatus 1500 starts a receive operation, and in the case of distribution data such as that shown in FIG.5, for example, reads one item of the restaurant information distribution data shown in FIG.7 (step ST1601), and data receiving section 105 extracts the distribution data. At the same time, control data receiving section 103 extracts control information. Then cell ID extraction section 1502 extracts the cell IDs of all cells for which reception is currently possible containing the cell ID of the local cell in which the terminal apparatus itself is currently performing communication, and transmission status monitoring section 1501 measures the received signal strength and monitors the transmission status (step ST1602).

Next, cell ID storage section 1503 updates the cell ID correspondence table constituting data sort information (step ST1603). The cell ID correspondence table is as shown in FIG.18, for example, and cell IDs '0x0A', '0x0B', and '0x0C' extracted by cell ID extraction section 1502, and the received signal strength of each cell ID, are updated. In FIG.18, the received signal strength of cell ID '0x0B' is 38 dB, the received signal strength of cell ID '0x0A' is 36 dB, and the received signal strength of cell ID '0x0C' is 35 dB. In this case, since cell ID '0x0B' has the highest received signal strength, terminal apparatus 1500 performs communication using the cell with cell ID '0x0B'. The cell with cell ID '0x0A' and the cell with cell ID '0x0C' are cells adjacent to the cell with cell ID '0x0B', and terminal apparatus 1500 simultaneously receives signals from the cell with cell ID '0x0A' and the cell with cell ID '0x0C'.

Then data sort section 1504 arranges the distribution data by assigning priorities so that distribution data associated with a cell ID for which the received signal strength is high has a proportionally higher priority (step ST1604). Data format section 107 then converts the distribution data to a predetermined format for display, and display section 108 displays the distribution data (step ST1605). Any method can be used when distribution data is displayed, such as displaying items of information from top to bottom in high-to-low priority order, as shown in FIG.10 and FIG.11, or displaying only high-priority information.

Terminal apparatus 1500 then determines whether or not distribution data reception processing is to be terminated (step ST1606). If receptionprocessing is not to be terminated, the processing in step ST1601 through step ST1605 is repeated. On the other hand, if reception processing is to be terminated, distribution data reception is not performed.

Thus, according to Embodiment 3, by referencing data sort information stored with the correspondence between the cell ID of a cell in which communication is currently being performed and received signal strength indicated, and displaying distribution data accordingly, distribution data can be edited in a terminal apparatus, and not edited on the distribution end, enabling costs to be reduced. Also, according to Embodiment 3, a terminal apparatus arranges and displays distribution data automatically using cell IDs and received signal strength, enabling a user to find the most necessary distribution data speedily. Furthermore, according to Embodiment 3, distribution data is arranged using received signal strength, without comparing a cell ID extracted by cell ID extraction section 1502 with a cell ID associated with distribution data, rendering processing for comparing the cell ID of the local cell with a cell ID of cell ID information contained in distribution data unnecessary, and thereby enabling the processing load to be reduced.

In Embodiment 3, data sort information has been assumed to indicate the correspondence between a cell ID and received signal strength, but this is by no means limiting, and it is possible to use data sort information indicating the correspondence between any parameter and a cell ID, such as the correspondence between a cell ID and the transmission error rate.

### (Embodiment 4)

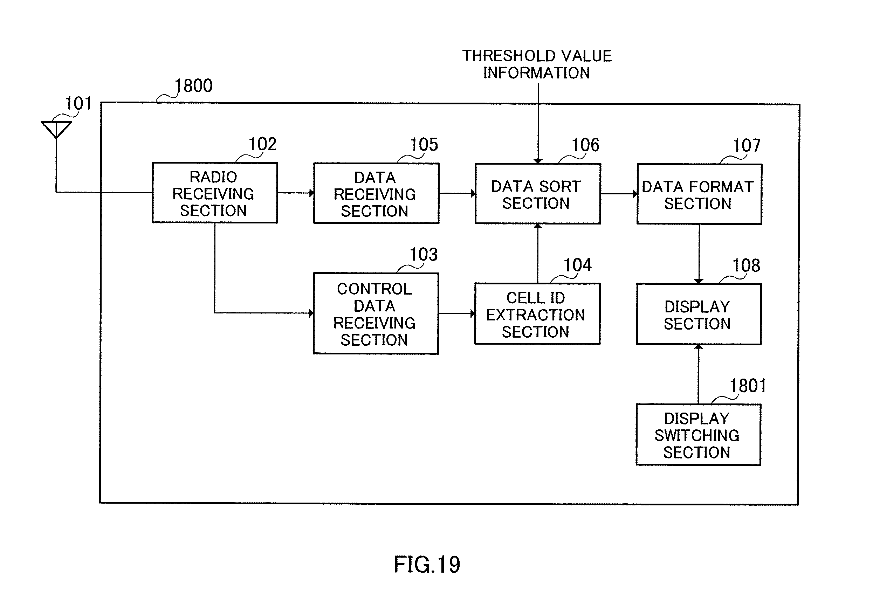

FIG.19 is a block diagram showing the configuration of a terminal apparatus 1800 according to Embodiment 4 of the present invention.

In terminal apparatus 1800 according to Embodiment 4, as shown in FIG.19, a display switching section 1801 is added to the configuration of terminal apparatus 100 according to Embodiment 1 shown in FIG.2. Parts in FIG.19 constituting the same configuration elements as in FIG.2 are assigned the same codes as in FIG.2, and descriptions thereof are omitted. The configuration of a distribution server according to Embodiment 4 is identical to that in FIG.3, and therefore a description thereof is also omitted here.

Display switching section 1801 is a switch, for example, and controls display section 108 by means of a user switching operation so as to switch display between a full-display mode in which all the distribution data input from data format section 107 is displayed, and a partial-display mode in which only distribution data whose priority is greater than or equal to a threshold value is displayed. In partial-display mode, display switching section 1801 is not limited to performing control so that distribution data whose priority is greater than or equal to a threshold value is displayed, but can also perform control so that only distribution data with the highest priority is displayed.

Based on display switching section 1801 control, display section 108 performs display switching between display of all the distribution data input from data format section 107, and display of only distribution data whose priority is greater than or equal to a threshold value among the distribution data input from data format section 107 (for example, 'high' priority distribution data and 'medium' priority distribution data). When partial-display mode is a mode in which only distribution data with the highest priority is displayed, display section 108 switches between display of all the distribution data input from data format section 107, and display of only distribution data whose priority is greater than or equal to a threshold value among the distribution data input from data format section 107 (for example, 'high' priority distribution data), based on display switching section 1801 control.

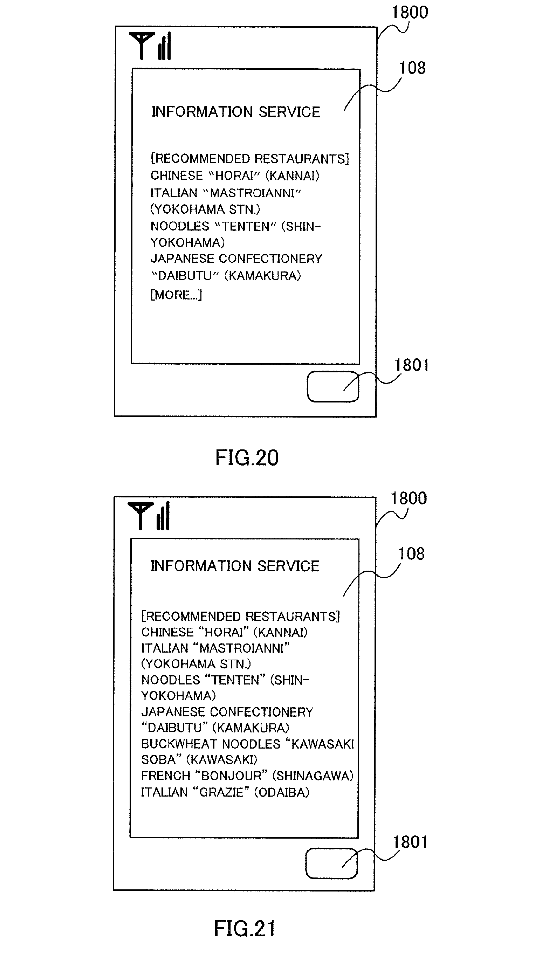

FIG.20 is a drawing showing a display on display section 108 in partial-display mode, and FIG.21 is a drawing showing a display on display section 108 in full-display mode. If, for example, the user wishes to view all the received distribution data while viewing a display in which only part of the received distribution data is displayed, as shown in FIG.20, the user can cause all the received distribution data to be displayed as shown in FIG.21 by operating display switching section 1801. Apart from the switchover between displaying all the distribution data or part of the distribution data received in step ST509 in FIG. 6, the operation of terminal apparatus 1800 is the same as in FIG.6, and therefore a description thereof is omitted here.

Thus, according to Embodiment 4, in addition to providing the effects of Embodiment 1 described above, switching is performed between display of all the received distribution data and display of part of the received distribution data, so that a user wishing to view only high-priority distribution data can find necessary information speedily by not having unnecessary distribution data displayed, and a user can also view all distribution data when wishing to do so, thus enabling distribution data to be displayed in an easy-to-view manner.

### (Embodiment 5)

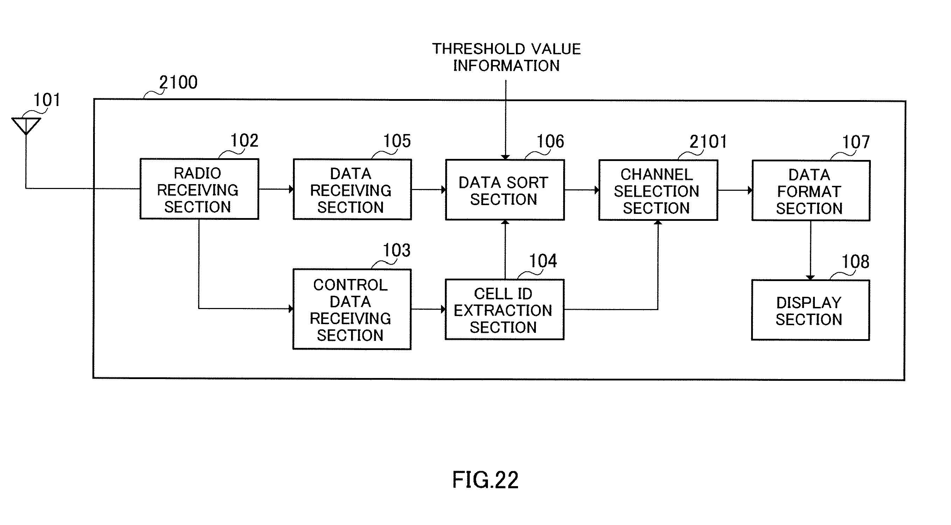

FIG.22 is a block diagram showing the configuration of a terminal apparatus 2100 according to Embodiment 5 of the present invention.

In terminal apparatus 2100 according to Embodiment 5, as shown in FIG.22, a channel selection section 2101 is added to the configuration of terminal apparatus 100 according to Embodiment 1 shown in FIG.2. Parts in FIG.22 constituting the same configuration elements as in FIG.2 are assigned the same codes as in FIG.2, and descriptions thereof are omitted.

Cell ID extraction section 104 extracts the cell ID of the local cell, in which terminal apparatus 2100 is currently performing communication, from control information input from control data receiving section 103, and outputs cell ID information--that is, information as to the extracted cell ID--to data sort section 106 and channel selection section 2101.

Data receiving section 105 extracts distribution data from a received signal input from radio receiving section 102, and outputs this data to data sort section 106. The distribution data extracted by data receiving section 105 is program selection menu information for selecting a broadcast program and data of broadcast programs. Program selection menu information includes channel information--that is, information on channels on which broadcast program data is distributed--and cell ID information, and program guide information is composed of a plurality of program selection menus. Data of each broadcast program is received as a received signal of a different channel for each broadcast program.

Data sort section 106 compares the cell ID contained in each program selection menu of program guide information input from data receiving section 105 with the cell ID input from cell ID extraction section 104. Then, based on the result of the comparison, data sort section 106 arranges the program selection menus within the program guide information input from data receiving section 105. Data sort section 106 then outputs program guide information in which the program selection menus have been arranged, and data of each broadcast program, to channel selection section 2101. Specifically, whether or not there is a program selection menu containing the cell ID of the local cell in which communication is currently being performed is determined, the difference between the cell ID contained in each program selection menu and the cell ID of the local cell is found, the found difference is compared with a threshold value, the priority of each program selection menu is determined, and program selection menus are arranged and output to channel selection section 2101 together with the data of each broadcast program. When only program selection menus containing the cell ID of the local cell are arranged, threshold value information is not necessary.

Channel selection section 2101 selects a channel based on program guide information input from data sort section 106 and cell ID information input from cell ID extraction section 104. Specifically, channel selection section 2101 selects a channel of channel information contained in a program selection menu containing information of the cell ID of the local cell. Then channel selection section 2101 outputs information as to the selected channel and program guide information input from data sort section 106 to data format section 107.

Display section 108 displays program guide information input from data format section 107. Furthermore, display section 108 displays data of a broadcast program distributed using the selected channel together with the program guide information, according to information on the channel selected by channel selection section 2101 input from data format section 107.

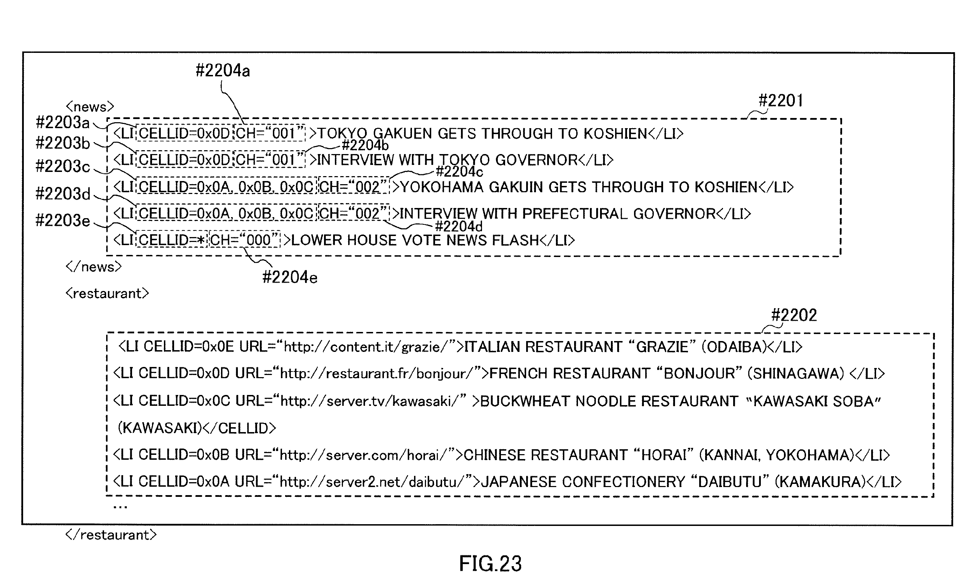

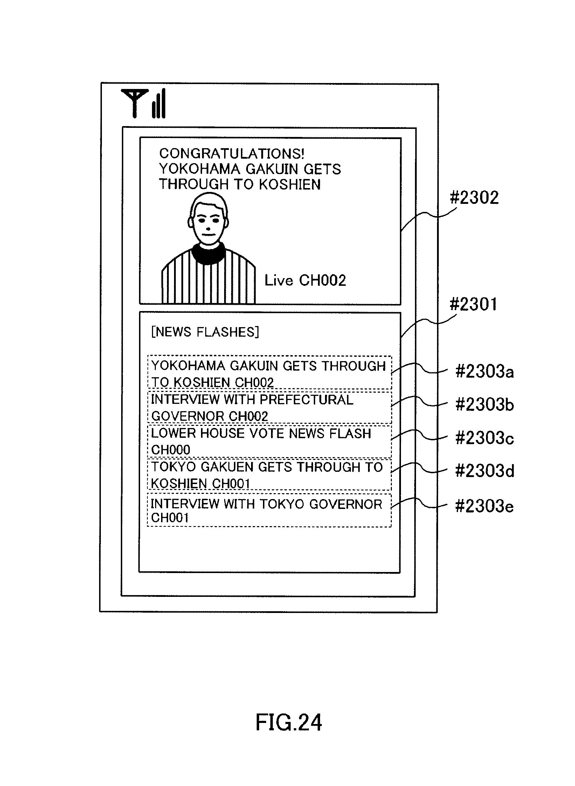

The operation of terminal apparatus 2100 that receives distribution data will now be described using FIG.23 and FIG.24. FIG.23 is a drawing showing distribution data displayed on terminal apparatus 2100, and FIG.24 is a drawing showing program guide information of distribution data received by terminal apparatus 2100.

Program guide information comprises, for example, news information #2201 and restaurant information #2202, as shown in FIG.23. In news information #2201, '0x0D' cell ID information #2203a and 'CH="001"' channel information #2204a are included in the 'Tokyo Gakuen gets through to Koshien' program selection menu information in the first line, '0x0D' cell ID information #2203b and 'CH="001"' channel information #2204b are included in the 'Interview with Tokyo Governor' program selection menu information in the second line, '0x0A', '0x0B', and '0x0C' cell ID information #2203c and 'CH="002"' channel information #2204c are included in the 'Yokohama Gakuin gets through to Koshien' program selection menu information in the third line, '0x0A', '0x0B', and '0x0C' cell ID information #2203d and 'CH="002"' channel information #2204d are included in the 'Interview with Prefectural Governor' program selection menu information in the fourth line, and all cell ID information #2203e indicated by '*' and 'CH="000"' channel information #2204e are included in the 'Lower House Vote News Flash' program selection menu information in the fifth line.

Data sort section 106 arranges the distribution data based on the respective priorities. For example, if terminal apparatus 2100 performing communication in Yokohama area cell #311 with a cell ID of '0x0B' receives news information #2201 in FIG.23, data sort section 106 selects 'Yokohama Gakuin gets through to Koshien' and 'Interview with Prefectural Governor' program selection menu information containing the '0x0B' cell ID, makes the priority of this information 'high', and places this information at the top.

Next, data sort section 106 takes 'Lower House Vote News Flash' program selection menu information containing all cell IDs as having the next highest priority, and places this next after the 'Yokohama Gakuin gets through to Koshien' and 'Interview with Prefectural Governor' program selection menu information.

Then, by performing subtraction between cell IDs, data sort section 106 places 'Tokyo Gakuen gets through to Koshien' and 'Interview with Tokyo Governor' program selection menu information containing cell ID '0x0D' of the Tokyo area cell farthest from a Yokohama area cell in news information #2201 next after 'Lower House Vote News Flash' program selection menu information.

Furthermore, channel selection section 2101 selects channel 002 that broadcasts the 'Yokohama Gakuen gets through to Koshien' or 'Interview with Prefectural Governor' containing the '0x0B' cell ID.

Next, as shown in FIG.24, in the program guide information displayed in lower screen area #2301, display section 108 displays Yokohama area cell 'Yokohama Gakuin gets through to Koshien' program selection menu information #2303a at the top, displays 'Interview with Prefectural Governor' program selectionmenu information #2303b next after program selection menu information #2303a, displays 'Lower House Vote News Flash' program selection menu information #2303c common to all cells next after program selection menu information #2303b, displays Tokyo area cell 'Tokyo Gakuen gets through to Koshien' program selection menu information #2303d next after program selection menu information #2303c, and displays 'Interview with Tokyo Governor' program selection menu information #2303e next after program selection menu information #2303d. Furthermore, as shown in FIG.24, in upper screen area #2302, display section 108 displays broadcast program data 'Yokohama Gakuin gets through to Koshien' distributed using the channel selected by channel selection section 2101.

The user of terminal apparatus 2100 then selects (clicks) an underlined part of the program selection menu information displayed in lower screen area #2301, and the selected broad cast program data is displayed in screen upper area #2302. The processing performed for restaurant information #2202 is similar to that for news information #2201 described above, and therefore, a description thereof is omitted here.

Thus, according to Embodiment 5, in addition to providing the effects of Embodiment 1 described above, a channel is selected from channel information contained in a program selection menu that contains the cell ID of the local cell, and program guide information display and display of broadcast programs distributed using the selected channel are performed simultaneously, enabling a state in which no broadcast program is displayed to be eliminated during the period until the user selects a broadcast program. Also, according to Embodiment 5, a broadcast program distributed in a channel of channel information contained in program selection menu information containing the cell ID of the local cell is displayed first, enabling the user to view the most necessary broadcast program speedily.

In Embodiment 5, it has been assumed that a channel is selected from channel information contained in a program selection menu containing the cell ID of the local cell, but this is by no means limiting, and a channel of channel information contained in a program selection menu containing the cell ID of a cell other than the local cell may also be selected and arranged to be broadcast first. Also, it is possible for Embodiment 5 to be applied to Embodiment 2 through Embodiment 4.

### (Embodiment 6)

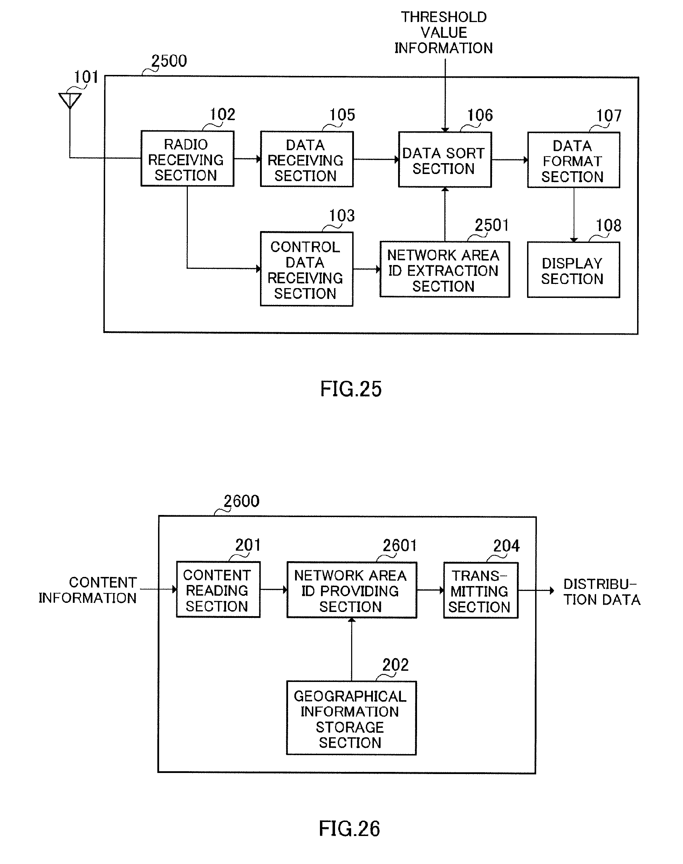

FIG.25 is a block diagram showing the configuration of a terminal apparatus 2500 according to Embodiment 6 of the present invention.

In terminal apparatus 2500 according to Embodiment 6, as shown in FIG.25, cell ID extraction section 104 is eliminated from, and a network area ID extraction section 2501 is added to, the configuration of terminal apparatus 100 according to Embodiment 1 shown in FIG.2. Parts in FIG.25 constituting the same configuration elements as in FIG.2 are assigned the same codes as in FIG.2, and descriptions thereof are omitted.

Control data receiving section 103 extracts all control information other than application data from a received signal input from radio receiving section 102, and outputs this control information to network area ID extraction section 2501.

Network area ID extraction section 2501 extracts the network area ID (cell information) of the network area to which terminal apparatus 2500 (the station itself, or 'local station') currently belongs from control information input from control data receiving section 103, and outputs network area ID information--that is, information as to the extracted network area ID--to data sort section 106. Here, a network area ID is an area specified by a plurality of cells. A network area ID is an ID identifying a network area, represented numerically so that a different numeric value is indicated for each network area, and is a logical ID associated with a plurality of cells belonging to a network area.

Data sort section 106 compares the network area ID contained in the distribution data input from data receiving section 105 with the network area ID input from network area ID extraction section 2501. Then, based on the result of the comparison, data sort section 106 arranges the distribution data input from data receiving section 105, and outputs this data to data format section 107. Specifically, whether or not there is distribution data containing the network area ID of the network area to which terminal apparatus 2500 belongs is determined, the difference between the network area ID contained in the distribution data and the network area ID of the network area to which terminal apparatus 2500 belongs is found, the found difference is compared with a threshold value, the priority of each distribution data is determined, and distribution data is arranged accordingly. When only distribution data containing the network area ID of the network area to which terminal apparatus 2500 belongs is arranged, threshold value information is not necessary.

The configuration of a distribution server 2600 will now be described using FIG.26. FIG.26 is a block diagram showing the configuration of distribution server 2600.

In distribution server 2600 according to Embodiment 6, as shown in FIG.26, cell IDproviding section 203 is eliminated from, and a network area ID providing section 2601 is added to, the configuration of distribution server 200 according to Embodiment 1 shown in FIG.3. Parts in FIG.26 constituting the same configuration elements as in FIG.3 are assigned the same codes as in FIG.3, and descriptions thereof are omitted.

Content reading section 201 reads content (multimedia data such as text, image, and voice data), and outputs this data to network area ID providing section 2601. Here, content includes a plurality of arbitrary information associated with a latitude and longitude constituting location information, comprising, for example, information indicating correspondence between a store and the latitude and longitude of the store, or information indicating correspondence between regional news and the latitude and longitude of that region.

Geographical information storage section 202 stores a table holding conversion information indicating correspondence between network area IDs and a range of latitudes and longitudes, or a formula enabling a network area ID to be found from a latitude and longitude.

Network area IDproviding section 2601 references latitude information and longitude information from content input from content reading section 201. Then, using the referenced latitude information and longitude information, network area ID providing section 2601 selects a network area ID by referencing conversion information stored in geographical information storage section 202, or performing calculation using a formula. Network area ID providing section 2601 then includes a network area ID selected for the contents of each content in the relevant content, and outputs this to transmitting section 204.

Transmitting section 204 transmits content input from network area ID providing section 2601 as distribution data.

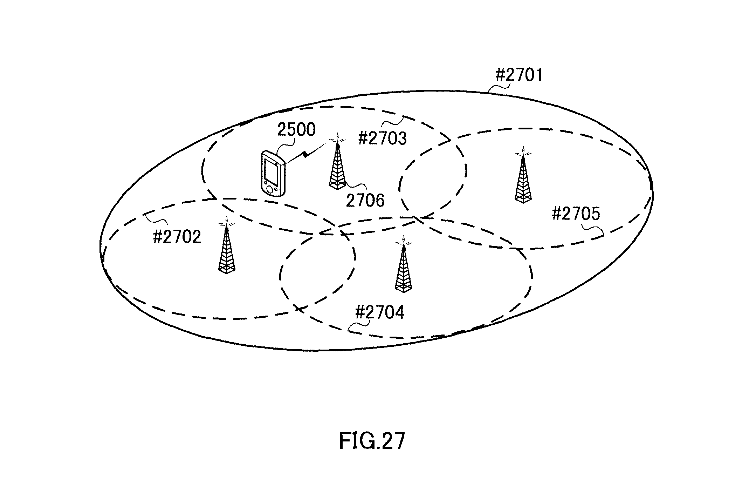

FIG.27 is a drawing showing the relationship between cells and a network area. A network area #2701 is composed of a plurality of cells #2702, #2703, #2704, and #2705. In FIG.27, terminal apparatus 2500 is performing communication with a base station apparatus 2706 in cell #2703, but distribution information relating to network area #2701--that is, distribution information relating to cells #2702, #2703, #2704, and #2705--can be displayed as high-priority information. The operation of terminal apparatus 2500 that receives distribution data and the distribution data display method in terminal apparatus 2500 are the same as in FIG. 6 through FIG.11, except for the fact that network area IDs are used instead of cell IDs, and therefore descriptions thereof are omitted here.

Thus, according to Embodiment 6, by arranging and displaying distribution data based on the results of comparison between the network area ID of network area #2701 to which a terminal apparatus belongs, and network area IDs contained in various distribution data, distribution data can be edited in the terminal apparatus, and not edited on the distribution end, enabling costs to be reduced. Also, according to Embodiment 6, a terminal apparatus arranges distribution data automatically using network area IDs, enabling a user to find the most necessary information speedily. Furthermore, according to Embodiment 6, when distribution data associated with the cell ID of any cell that is not included in network area #2701 is displayed as high-priority information by means of user selection, the user can speedily find distribution data associated with any location other than network area #2701. Moreover, according to Embodiment 6, distribution data within network area #2701 close to local cell #2703 can be displayed as highest-priority distribution data, enabling the user to speedily find distribution data of cells #2702, #2704, and #2705 close to local cell #2703. Also, according to Embodiment 6, by using the network area ID of network area #2701 as the equivalent of a cell ID, distribution data associated with an area larger than a cell can be displayed.

In Embodiment 6, a network area has been assumed to be composed of four cells, but this is by no means limiting, and the number of cells making up a network area can be decided arbitrarily. Furthermore, Embodiment 6 can also be applied to above-described Embodiment 2 through Embodiment 5.

In above-described Embodiment 1 through Embodiment 6, it has been assumed that distribution data is arranged using cell IDs or network area IDs, but this is by no means limitng, and distribution data can be arranged using any location information, such as a zip code or the like. In above-described Embodiment 1 through Embodiment 6, it has been assumed that distribution data is displayed after being converted to HTML format, but this is by no means limiting, and it is possible for distribution data to be converted to any displayable format. In above-described Embodiment 1 through Embodiment 6, it has been assumed that latitude and longitude are used as location information associated with distribution data, but this is by no means limiting, and it is possible to use any location information, such as a zip code or the like. In above-described Embodiment 1 through Embodiment 6, distribution data may be transmitted using FLUTE (File Delivery over Unidirectional Transport), and cell information can be written by using or extending a field stipulated in FLUTE, for example. FLUTE is a file transfer method currently under discussion by the IETF, and is a suitable method for transmitting metadata. In above-described Embodiment 1 through Embodiment 6, distribution data may include layout information. Layout information is control information that specifies how content is to be laid out and displayed, and SMIL (Synchronized Multimedia Integration Language), for example, can be used for this purpose. SMIL is a layout description language recommended by W3C (The World Wide Web Consortium). A cell ID can be specified in an SMIL layout, enabling layout or display content linkage to be established.

The present application is based on Japanese Patent Application No.2004-29624 filed on February 5, 2004, entire content of which is expressly incorporated herein by reference.

### Industrial Applicability

A terminal apparatus and received data display method of the present invention have an effect of enabling costs to be reduced and necessary information to be found speedily by editing distribution data in the terminal apparatus, and not editing distribution data on the distribution end, and are suitable for displaying distributed data.

## Claims

1. A terminal apparatus comprising:
a receiving section that receives distribution data containing cell information, which is information for identifying an area specified by a cell;
a data sort section that, based on said cell information contained in said distribution data received by said receiving section, and information of said area to which the station itself belongs, determines a priority of said distribution data, and arranges said distribution data in order starting with distribution data for which said priority is highest; and
a display section that displays said distribution data in an order in which it has been arranged by said data sort section.

2. The terminal apparatus according to claim 1, wherein:
said receiving section receives said distribution data containing said cell information of said area specified by a plurality of cells; and
said data sort section makes said distribution data containing said cell information of said area to which the station itself belongs highest-priority distribution data.

3. The terminal apparatus according to claim 1,
wherein:
said receiving section receives said distribution data containing said cell information of said area specified by one cell; and
said data sort section determines a priority of said distribution data based on said cell information and information of the local cell, which is said area to which the station itself belongs.

4. The terminal apparatus according to claim 3, wherein said data sort section makes a priority of said distribution data containing said cell information indicating the local cell the highest priority, and among said distribution data containing said cell information indicating other cells, arranges said distribution data so that the farther a cell is from the local cell, the lower is its priority.

5. The terminal apparatus according to claim 3, wherein:
said receiving section receives said distribution data containing location information which is information indicating a location for each area narrower than said cell information, and said cell information; and
said data sort section, among said distribution data containing said cell information indicating the local cell, arranges said distribution data so that the nearer a location of said location information is to its own location, the higher a priority thereof is made.

6. The terminal apparatus according to claim 3, further comprising a received signal strength measuring section that measures received signal strength in each cell from a received signal,
wherein said data sort section arranges said distribution data so that the higher the received signal strength measured by said received signal strength measuring section of a cell indicated by said cell information contained in said distribution data, the higher a priority thereof is made.

7. The terminal apparatus according to claim 3, wherein said display section displays said distribution data for which said priority is greater than or equal to a threshold value.

8. The terminal apparatus according to claim 3, further comprising a display switching section that selects a partial-display mode in which said distribution data for which said priority is greater than or equal to a threshold value is displayed by said display section, or a full-display mode in which all received said distribution data is displayed by said display section,
wherein said display section displays distribution data for which said priority is greater than or equal to a threshold value when said partial-display mode is selected by said display switching section, and displays all received distribution data when said full-display mode is selected by said display switching section.

9. The terminal apparatus according to claim 3, further comprising a channel selection section that selects a channel based on local cell information, and said cell information and channel information which is information of a channel that distributes broadcast program data that are contained in said distribution data received by said receiving section,
wherein said display section first displays said broadcast program data distributed using said channel selected by said channel selection section.

10. The terminal apparatus according to claim 9, wherein said channel selection section selects a channel of said channel information contained in said distribution data containing said cell information of the local cell.

11. A distribution server that transmits said distribution data to the terminal apparatus according to claim 3, said distribution server comprising:
a location information providing section that includes said cell information in content; and
a transmitting section that transmits said content in which said cell information has been included by said location information providing section to said terminal apparatus as said distribution data.

12. A received data display method comprising:
a step of receiving distribution data containing cell information, which is information for identifying an area specified by a cell; and
a step of, based on said cell information contained in said distribution data received by said receiving section, and information of said area to which the station itself belongs, determining a priority of said distribution data, and arranging said distribution data in order starting with distribution data for which said priority is highest; and
a step of displaying said distribution data in an order in which it has been arranged.

13. The received data display method according to claim 12, wherein:
said distribution data containing said cell information of said area specified by a plurality of cells is received; and
said distribution data containing said cell information of said area to which the station itself belongs is made highest-priority distribution data.

14. The received data display method according to claim 12, wherein:
said distribution data containing said cell information of said area specified by one cell is received; and
a priority of said distribution data is determined based on said cell information and information of the local cell, which is said area to which the station itself belongs.

15. The received data display method according to claim 14, wherein a priority of said distribution data containing said cell information indicating the local cell is made the highest priority, and among said distribution data containing said cell information indicating other cells, said distribution data is arranged so that the farther a cell is from the local cell, the lower is its priority.

16. The received data display method according to claim 14, wherein said distribution data containing location information which is information indicating a location for each area narrower than said cell information, and said cell information, are received, and among said distribution data containing said cell information indicating the local cell, said distribution data is arranged so that the nearer a location of said location information is to its own location, the higher a priority thereof is made.

17. The received data display method according to claim 14, further comprising a step of measuring received signal strength in each cell from a received signal,
wherein said distribution data is arranged so that the higher the measured received signal strength of a cell indicated by said cell information contained in said distribution data, the higher a priority thereof is made.

18. The received data display method according to claim 14, wherein said distribution data for which said priority is greater than or equal to a threshold value is displayed.

19. The received data display method according to claim 14, further comprising a step of selecting a partial-display mode in which said distribution data for which said priority is greater than or equal to a threshold value is displayed, or a full-display mode in which all received said distribution data is displayed,
wherein distribution data for which said priority is greater than or equal to a threshold value is displayed when said partial-display mode is selected, and all received distribution data is displayed when said full-display mode is selected.

20. The received data display method according to claim 14, further comprising a step of selecting a channel based on local cell information and channel information which is information of a channel that distributes said cell information and broadcast program data contained in said received distribution data,
wherein said broadcast program data distributed using selected said channel is displayed first.

21. The received data display method according to claim 20, wherein a channel of said channel information contained in said distribution data containing said cell information of the local cell is selected.
